# EUROPEAN PATENT APPLICATION

(11) **EP 4 773 685 A1**
(43) Date of publication of application: **08.07.2026**
(21) Application number: 24887417.4
(22) Date of filing: 26.06.2024
(51) Int. Cl.: H04W 52/02

(54) **SIGNAL PROCESSING METHOD, ELECTRONIC DEVICE AND STORAGE MEDIUM**

(30) Priority: 08.11.2023 CN 202311490848
(71) Applicant: ZTE CORPORATION, Shenzhen, Guangdong 518057 (CN)
(72) Inventor: HU, Youjun, Shenzhen, Guangdong 518057 (CN); DAI, Bo, Shenzhen, Guangdong 518057 (CN); CHEN, Mengzhu, Shenzhen, Guangdong 518057 (CN); YANG, Weiwei, Shenzhen, Guangdong 518057 (CN); LIU, Kun, Shenzhen, Guangdong 518057 (CN); MA, Xiaoying, Shenzhen, Guangdong 518057 (CN); GUO, Qiujin, Shenzhen, Guangdong 518057 (CN); XU, Jun, Shenzhen, Guangdong 518057 (CN)
(74) Representative: Aipex B.V.
(86) International application number: PCT/CN2024/101674
(87) International publication number: WO 2025/097793

(57) **Abstract**

Provided are a signal processing method, an electronic device, and a storage medium, applied to the field of wireless communication technology. The method includes performing processing according to a target signal and configuration. The processing includes at least one of the following: measurement of the target signal or monitoring of the target signal.

## Description

This application claims priority to Chinese Patent Application No. 202311490848.2, filed with the China National Intellectual Property Administration (CNIPA) on Nov. 08, 2023 and entitled "SIGNAL PROCESSING METHOD, ELECTRONIC EQUIPMENT AND STORAGE MEDIUM", the disclosure of which is incorporated herein by reference in its entirety.

### TECHNICAL FIELD

The present invention relates to the field of wireless communication technology, particularly a signal processing method, an electronic device, and a storage medium.

### BACKGROUND

With the development of 5G technologies, due to the limitations imposed by the characteristics of 5G, the power consumption of 5G is currently higher than that of 4G. Moreover, in non-standalone networking, it is necessary to maintain two communication links, namely Long Term Evolution (LTE) and New Radio (NR), simultaneously, resulting in relatively high baseline power consumption of existing terminals. As a result, low power consumption has gradually become an important technical indicator for wireless communication technologies, including 5G, 6G, and future wireless communications. At present, to save terminal power consumption, reduce communication latency, or improve user perceived throughput (UPT), low-power signals may be used in terminal modes such as an idle state, an inactive state, and a connected state. However, how low-power signals are to be processed in these terminal modes currently lacks a clear processing solution in the industry.

### SUMMARY

In an aspect, embodiments of the present application provide a signal processing method applied to a first communication node. The method includes performing processing according to a target signal and configuration. The processing includes at least one of the following: measurement of the target signal or monitoring of the target signal.

In another aspect, embodiments of the present application also provide a signal processing method applied to a second communication node. The method includes transmitting a target signal and configuration.

In another aspect, embodiments of the present application also provide an electronic device. The electronic device includes one or more processors; and a memory configured to store one or more programs. When executed by the one or more processors, the one or more programs cause the one or more processors to perform the signal processing method of any embodiment of the present application.

In another aspect, embodiments of the present application also provide a computer-readable storage medium storing one or more programs which, when executed by one or more processors, cause the one or more processors to perform the signal processing method of any embodiment of the present application.

It is to be understood that the content described in this section is not intended to identify the key or important features of the embodiments of the present application, nor is it intended to limit the scope of the present application. Other features of the present application become easily understood through the following specification.

### BRIEF DESCRIPTION OF DRAWINGS

To illustrate technical solutions in embodiments of the present application more clearly, the drawings used in the description of the embodiments are briefly described below. Apparently, the drawings described below are merely part of the embodiments of the present application, and those of ordinary skill in the art may obtain other drawings based on the drawings below on the premise that no creative work is done.
FIG. 1 is a flowchart of a signal processing method according to embodiments of the present application.
FIG. 2 is an example diagram of target signal processing configuration according to embodiments of the present application.
FIG. 3 is a flowchart of a signal processing method according to embodiments of the present application.
FIG. 4 is a diagram illustrating the structure of a signal processing apparatus according to embodiments of the present application.
FIG. 5 is a diagram illustrating the structure of a signal processing apparatus according to embodiments of the present application.
FIG. 6 is a diagram illustrating the structure of an electronic device according to embodiments of the present application.

### DETAILED DESCRIPTION

It is to be understood that the embodiments described herein are intended to explain the present application, not to limit the present invention.

In the subsequent description, the term such as "module", "component", or "unit" for representing an element is used to facilitate the description of the present invention and has no particular meaning. Therefore, "module", "component", and "unit" may be used in a mixed manner.

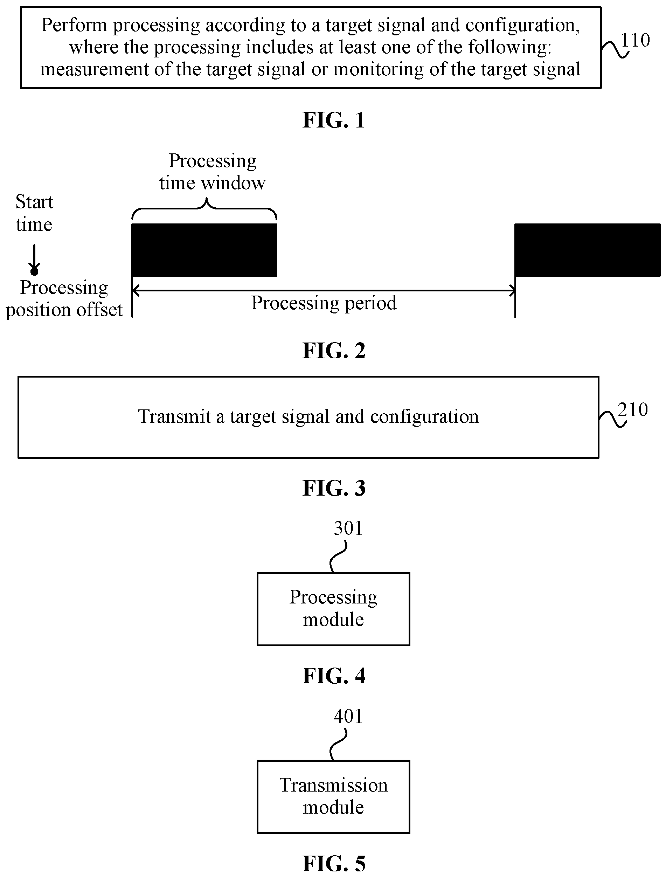

FIG. 1 is a flowchart of a signal processing method according to embodiments of the present application. Referring to FIG. 1, this embodiment of the present application can be applied to a scenario in which a terminal device processes a low-power wake-up signal. The method is generally applied to a first communication node. The first communication node may include the terminal device. The method of this embodiment of the present application includes the following:

In step 110, processing is performed according to a target signal and configuration. The processing includes at least one of the following: measurement of the target signal or monitoring of the target signal.

In this embodiment of the present application, the first communication node may perform measurement or monitoring according to one or more of the target signal and the configuration. The measurement of the target signal may include signal filtering. The monitoring of the target signal may include receiving, monitoring, detection, or blind detection of the target signal.

In this embodiment of the present application, processing of the low-power signal is implemented by using the configuration and the target signal, thereby reducing power consumption during wireless communication and improving the battery life of the terminal.

Further, based on the previous embodiment of the present application, the target signal includes at least one of the following: a first signal or a second signal. The first signal includes at least one of the following: a low-power wake-up signal or a low-power synchronization signal. The second signal includes at least one of the following: a secondary synchronization signal, a primary synchronization signal, a demodulation reference signal, a channel state information reference signal, or a synchronization signal block.

In this embodiment of the present application, the target signal may be classified into a first signal and a second signal according to types. The first signal may include at least one of the following: a low-power wake-up signal or a low-power synchronization signal. The second signal may include at least one of the following: a secondary synchronization signal, a primary synchronization signal, a demodulation reference signal, a channel state information reference signal, or a synchronization signal block. The synchronization signal block may include a cell-defining synchronization signal block (CD-SSB) and a non-cell-defining synchronization signal block (NCD-SSB).

Based on the previous embodiments of the present application, the configuration includes at least one of the following: target signal processing configuration or measurement-related configuration. The measurement-related configuration includes at least one of the following: a threshold, an offset, or a reference value.

In this embodiment of the present application, the configuration used by the first communication node in processing may include target signal processing configuration for processing the target signal and measurement-related configuration. The measurement-related configuration may include at least one of the following: a threshold, an offset, or a reference value.

Further, based on the previous embodiments of the present application, determining the configuration according to the capability of the first communication node includes at least one of the following: first communication nodes with different capabilities are different in configured threshold or configured threshold parameter; first communication nodes with different capabilities are the same in configured threshold parameter and different in configured threshold; first communication nodes with different capabilities are different in configured offset or configured offset parameter; first communication nodes with different capabilities are the same in configured offset parameter and different in configured offset; first communication nodes with different capabilities are different in configured reference value or configured reference value parameter; first communication nodes with different capabilities are the same in configured reference value parameter and different in configured reference value; or first communication nodes with different capabilities are different in configured target signal processing configuration.

In this embodiment of the present application, the first communication node may determine the configuration according to the capability of the first communication node. The configuration may include at least one of measurement-related configuration or target signal processing configuration. Specifically, first communication nodes with different capabilities are different in configured threshold or configured threshold parameter; or first communication nodes with different capabilities are different in configured offset or configured offset parameter; or first communication nodes with different capabilities are different in configured reference value or configured reference value parameter; or first communication nodes with different capabilities are different in configured target signal processing configuration. In some embodiments of the present application, first communication nodes with different capabilities are the same in configured parameter value, configured offset parameter, and configured reference value parameter, but the configured parameter value parameter, the configured offset parameter, and the configured reference value parameter are different in value. In some embodiments of the present application, different capabilities indicate that different parameters are configured, different functions are configured, different functions are supported, or different communication node types are supported. For example, a threshold determined by a user equipment (UE) with a first wake-up receiver (WUR) capability is different from a threshold determined by a UE with a second WUR capability.

In an example embodiment, two thresholds are defined for the UE with the WUR1 capability and the UE with the WUR2 capability, including two different thresholds or two different threshold parameters.

For example, the measured reference signal receiving power (RSRP) for the UE with the WUR1 capability and the RSRP for the UE with the WUR2 capability are configured with thresholds: Srxlev ≤ S1 for WUR1 and Srxlev ≤ S2 for WUR2.

Srxlev may represent a received power class value selected by a serving cell.

For example, for the two WURs, the measured RSRQ has thresholds: Squal ≤ Q1; Squal ≤ Q2; [Srxlev ≤ SnonIntraSearchP or Squal ≤ SnonIntraSearchQ].

For example, Srxlev ≤ SnonIntraSearchP, but UEs with different WUR capabilities may be different in SnonIntraSearchP. That is, UEs with different WUR capabilities are the same in threshold parameter but different in value. The same goes to offset or reference value.

In an example embodiment, for the UE with the WUR1 capability and the UE with the WUR2 capability, different thresholds or threshold parameters are defined, or two serving cell selection criteria are defined.

For example:
For the UE with the WUR1 capability, it is required to satisfy Srxlev > C1 AND Squal > C2.

For the UE with the WUR2 capability, it is required to satisfy Srxlev > C3 AND Squal > C4. C3 and C1 may be different. C4 and C2 may be different.

Further, based on the previous embodiments of the present application, the target signal includes a first signal and a second signal.

The first signal includes an idle state function signal. The second signal includes at least one of a connected state function signal, an inactive state function signal, or a terminal-specific configuration function signal. The terminal-specific configuration function signal includes a terminal-specific idle state function signal, a terminal-specific connected state function signal, and a terminal-specific inactive state function signal; or the first signal includes a function signal of a specific reception point, and the second signal includes a function signal of a specific area or cell; or the first signal includes a terminal-specific function signal, and the second signal includes a group-specific function signal; or the first signal includes a cell function signal, the second signal includes an area function signal, and the area includes at least one cell. The function signal includes at least one of a measurement signal, a synchronization signal, or a positioning signal. The reception point may also be referred to as a transmission reception point (TRP).

In this embodiment of the present application, the target signal may include a first signal and a second signal. When the first signal includes an idle state function signal, the second signal may include at least one of a connected state function signal, an inactive state function signal, or a terminal-specific configuration function signal, where the terminal-specific configuration function signal may include a function signal of a specific cell, a function signal of a specific area, a function signal of a specific reception point, a function signal of a specific inactive state; or when the first signal includes a function signal of a specific reception point, the second signal includes a function signal of a specific area or cell; or when the first signal includes a terminal-specific function signal, the second signal includes a group-specific function signal; or when the first signal includes an intra-cell function signal, the second signal may include an intra-area function signal, and the area may include one or more cells. In this embodiment of the present application, the function signal may include at least one of a measurement signal, a synchronization signal, or a positioning signal. In some embodiments of the present application, the first communication node triggers processing of the second signal according to processing of the first signal of the target signal. Alternatively, processing of the first signal is switched to processing of the second signal under certain conditions.

In an example embodiment, the first signal is a reference signal, for example, a sequence-based reference signal, for signal measurement or synchronization in an idle state signal. The second signal is another reference signal and is configured for measurement or synchronization in a connected state or an inactive state. When the UE switches from the idle state to another state, a reference signal used for measurement or synchronization changes. Similarly, the first signal may also be a reference signal in a connected state, the second signal may be a reference signal in an inactive state, and when the UE switches from the connected state to another state, for example, the inactive state, the UE switches from measurement or synchronization of the first signal to measurement or synchronization based on the second signal.

In an example embodiment, the first signal is a UE-specific reference signal, and the second signal is a group-specific or cell-specific reference signal. In some specific conditions, processing of the first signal is switched to processing of the second signal, or in some specific conditions, processing of the second signal is switched to processing of the first signal. The specific condition includes RRC state switching, monitoring search space switching, or monitoring space switching, for example, monitoring space corresponding to a low power wake-up signal (LP-WUS)/low power synchronization signal (LP-SS).

In an example embodiment, the target signal may include a first signal and a second signal. The first signal is a cell-based measurement signal, and the second signal is an area-based measurement signal. When the quality of the cell-based measurement signal is poor, measurement of the second signal is triggered. The first signal may also be UE-specific, and the second signal is group-specific or cell-specific.

In an example embodiment, the target signal may include a first signal and a second signal. The first signal is based on a first RAT, such as NR, and the second signal is based on a second RAT, such as LTE. The first signal is a wake-up signal and may also trigger monitoring, measurement, and reception of the second signal. The second signal may be a PDCCH, a PDSCH, or paging. In a dual-mode or multi-mode UE, reception of the first signal by one UE module may trigger reception of the second signal by another UE module.

Further, based on the previous embodiments of the present application, the measurement-related configuration includes at least one of the following: the measurement-related configuration is configured to determine signal strength, signal received power, signal quality, or signal received quality; the measurement-related configuration is configured to compare signal strength, signal received power, signal quality, or signal received quality; or the measurement-related configuration is configured to determine a difference or compare a difference.

Based on the target signal, the measurement-related configuration is configured to determine signal strength, signal received power, signal quality, or signal received quality. Based on the target signal, the measurement-related configuration is configured to compare signal strength, signal received power, signal quality, or signal received quality. Based on the target signal, the measurement-related configuration is configured to determine a difference or compare a difference. Based on the target signal, the measurement-related configuration is configured to determine signal strength or compare signal received power. Based on the target signal, the measurement-related configuration is configured to determine signal quality or compare signal received quality. Based on the target signal, the measurement-related configuration is configured to compare a difference.

The measurement-related configuration is configuration related to the target signal.

In this embodiment of the present application, the measurement-related configuration may have different uses. Specifically, the measurement-related configuration may be configured to determine at least one of signal strength, signal received power, signal quality, or signal received quality; or the measurement-related configuration may be configured to compare at least one of signal strength, signal received power, signal quality, or signal received quality; or the measurement-related configuration may be configured to determine a difference or a comparison difference. Based on the target signal, the measurement-related configuration is configured to determine signal strength, signal received power, signal quality, or signal received quality. Based on the target signal, the measurement-related configuration is configured to compare signal strength, signal received power, signal quality, or signal received quality. Based on the target signal, the measurement-related configuration is configured to determine a difference or compare a difference. Based on the target signal, the measurement-related configuration is configured to determine signal strength or compare signal received power. Based on the target signal, the measurement-related configuration is configured to determine signal quality or compare signal received quality. Based on the target signal, the measurement-related configuration is configured to compare a difference.

Further, based on the previous embodiments of the present application, the measurement-related configuration includes at least one of the following: the measurement-related configuration is configured to determine at least one of the following: cell selection/reselection, being not at a cell edge, low mobility, or being stationary; or the measurement-related configuration is configured to determine at least one of the following: serving cell measurement, neighboring cell measurement, intra-frequency cell measurement, inter-frequency cell measurement, measurements of inter-RAT E-UTRAN cells, measurement fallback, or measurement relaxation.

### (1) For determination of low mobility:

(Srxlev_{Ref} - Srxlev) < S_{SearchDeltaP1}. (Srxlev_{Ref} - Srxlev) < S_{SearchDeltaP2}. S_{SearchDeltaP1} and S_{SearchDeltaP2} are configured for the UE with the WUR1 capability and the UE with the WUR2 capability respectively.

Specifically, the values of S_{SearchDeltaP1} and S_{SearchDeltaP2} may be obtained in at least one of the following manners: S_{SearchDeltaP1} and S_{SearchDeltaP2} may be obtained by configuration of two parameters. S_{SearchDeltaP1} and S_{SearchDeltaP2} may be obtained by configuration of one parameter and one offset. For example, S_{SearchDeltaP1} = S_{SearchDeltaP2} + offset or SsearchDeltaP2 = S_{SearchDeltaP1} + offset. S_{SearchDeltaP1} and S_{SearchDeltaP2} may be obtained by configuration of only one parameter. For example, the offset is a default value. S_{SearchDeltaP1} and S_{SearchDeltaP2} are a pair of associated values. S_{SearchDeltaP1} ≥ SSearchDeltaP2. S_{SearchDeltaP1} ≤ SsearchDeltaP2.

### (2) For determination of being not at a cell edge:

The terminal relaxation measurement criterion satisfying being not at a cell edge: Srxlev > S_{SearchThresholdP} and Squal > S_{SearchThresholdQ}, if S_{SearchThresholdQ} is configured.

Srxlev = The current Srxlev value (dB) of the serving cell. Squal = The current Squal value (dB) of the serving cell.

S_{SearchThresholdP1} and S_{SearchThresholdQ1} are configured for the UE with the WUR1 capability. S_{SearchThresholdP2} and S_{SearchThresholdQ2} are configured for the UE with the WUR2 capability.

(3) For determination of a stationary terminal, the measurement relaxation criterion of being stationary is satisfied:
(Srxlev_{RefStationary} - Srxlev) < S_{SearchDeltaP-Stationary}. Srxlev = The current Srxlev value (dB) of the serving cell.

Srxlev_{RefStationary} = The reference Srxlev value 1 (dB) of the serving cell. At least one of the following is set: after selection or reselection of the serving cell; if (Srxlev-Srxlev_{RefStationary}) > 0; if the relaxation measurement criterion of T_{SearchDeltaP-Stationary} is not satisfied: the terminal sets the value of Srxlev_{RefStationary} as the current Srxlev value of the serving cell.

T_{SearchDeltaP-Stationary1} and T_{SearchDeltaP-Stationary2} are configured for the UE with the WUR1 capability and the UE with the WUR2 capability respectively.

(4) For determination of a terminal that is stationary and not at a cell edge, the satisfied measurement relaxation criteria include: T_{SearchDeltaP-Stationary}, Srxlev > S_{SearchThresholdP2}, and Squal > S_{SearchThresholdQ2}, if S_{SearchThresholdQ2} is configured.

Srxlev = The current Srxlev value of the serving cell. Squal = The current Squal value of the serving cell.

T_{SearchDeltaP-Stationary} 1 and T_{SearchDeltaP-Stationary} 2 are configured for the UE with the WUR1 capability and the UE with the WUR2 capability respectively.

S_{SearchThresholdP2-1} and SS_{earchThresholdQ2-1} are configured for the UE with the WUR1 capability.

S_{SearchThresholdP2-2} and S_{SearchThresholdQ2-2} are configured for the UE with the WUR2 capability.

(5) For determination of the serving cell measurement, the neighboring cell measurement, the intra-frequency cell measurement, the inter-frequency cell measurement, and the measurements of inter-RAT E-UTRAN cells, the satisfied conditions are similar, that is, the signal strength, the signal received power, the signal quality, or the signal received quality satisfies the condition of being greater than, equal to, or less than a threshold or a difference. Alternatively, after an offset is applied to the signal strength, the signal received power, the signal quality, or the signal received quality, the condition of being greater than, equal to, or less than a threshold or a difference is satisfied.

### (6) For determination of measurement fallback and measurement relaxation

The measurement fallback includes exiting the measurement of the first signal and using the measurement of the second signal. The measurement fallback includes exiting the mode of measurement relaxation.

The measurement relaxation includes increasing the measurement period of the neighboring cell or the serving cell and performing serving cell measurement by using the first signal.

Determination of the measurement fallback includes: based on measurement of the first signal, the signal strength, the signal received power, the signal quality, or the signal received quality does not satisfy the condition of being greater than, equal to, or less than a threshold or a difference; or after an offset is applied to the signal strength, the signal received power, the signal quality, or the signal received quality, the condition of being greater than, equal to, or less than a threshold or a difference is not satisfied. In this case, exiting the measurement of the first signal is performed, and returning to the normal measurement mode is performed.

Determination of the measurement relaxation includes that based on the measurement of the first signal and/or the measurement of the second signal, the signal strength, the signal received power, the signal quality, or the signal received quality satisfies the condition related to the measurement-related configuration. In this case, the first communication node performs measurement based on the relaxed measurement period of the neighboring cell or the serving cell.

In some embodiments, when the signal strength, signal received power, signal quality, or signal received quality of the first signal does not satisfy at least one of the conditions for cell selection, cell reselection, being not at a cell edge, low mobility, or being stationary, processing of the second signal is triggered. This includes cases where the signal strength, the signal received power, the signal quality, or the signal received quality based on the first signal do not satisfy the requirements of the measurement-related configuration, or do not satisfy the condition of being not at a cell edge, low mobility, or being stationary, or are not in the serving cell.

In some embodiments of the present application, determining the measurement-related configuration according to the capability of the first communication node includes at least one of the following: determining, by a first communication node with a first capability, at least one of a first offset, a first threshold, or a first reference value; determining, by a first communication node with a second capability, at least one of a second offset, a second threshold, or a second reference value; determining, by a first communication node with a first capability relative to a first communication node with a second capability, at least one of an offset, a threshold, or a reference value; or determining, by a first communication node with a first capability and a first communication node with a second capability, at least one of a same offset, a same threshold, or a same reference value.

In this embodiment of the present application, the first communication node with the first capability may determine the measurement-related configuration corresponding to the first capability, where the measurement-related configuration includes at least one of a first offset, a first threshold, or a first reference value. Correspondingly, the first communication node with the second capability may determine the measurement-related configuration corresponding to the second capability, where the measurement-related configuration includes at least one of a second offset, a second threshold, or a second reference value. It is to be understood that parameter values or parameters in the measurement-related configurations corresponding to first communication nodes with different capabilities may be different. In some other embodiments of the present application, it is feasible to determine at least one of the offset, the threshold, or the reference value according to a comparison result between the first communication node with the first capability and the first communication node with the second capability. For example, it is feasible to determine at least one of the offset, the threshold, or the reference value according to a performance difference between the first capability and the second capability.

In an example embodiment, when the measurement-related configuration is configured to determine cell selection/reselection, being not at a cell edge, low mobility, and being stationary and to determine serving cell measurement, neighboring cell measurement, intra-frequency cell measurement, inter-frequency cell measurement, measurements of inter-RAT E-UTRAN cells, measurement fallback, and measurement relaxation, an offset exists between the WUR1 capability and the UE with the WUR2 capability. It is feasible to determine the threshold corresponding to the UE with the WUR2 capability according to the offset and the threshold corresponding to the UE with the WUR1 capability and to determine the threshold corresponding to the UE with the WUR1 capability according to the offset and the threshold corresponding to the UE with the WUR2 capability. Alternatively, it is feasible to determine the threshold corresponding to the UE with the WUR1 capability according to the offset and the threshold corresponding to the UE with the WUR1 capability and to determine the threshold corresponding to the UE with the WUR2 capability according to the offset and the threshold corresponding to the UE with the WUR2 capability. Other measurement-related configurations other than the threshold are similar.

Further, based on the previous embodiments of the present application, the target signal processing configuration includes at least one of the following: a processing period, a processing time window, a processing position offset, or the number of processing times.

In this embodiment of the present application, the measurement-related configuration may include information such as a processing period, a processing time window, a processing position offset, and the number of processing times for processing the target signal. Referring to FIG. 2, the processing period may be a time distance from the start time for processing the target signal each time, the processing time window may be a time length for processing the target signal each time, and the processing position offset may be a time distance from the position for processing the target signal each time to the start time.

Further, based on the previous embodiments of the present application, the method also includes at least one of the following: a processing period, a processing time window, and the number of processing times of a first signal of the target signal and a processing period, a processing time window, and the number of processing times of a second signal of the target signal are the same, or have a multiple relationship, or have a subset relationship; a processing position offset of a first signal of the target signal is the same as a processing position offset of a second signal of the target signal; target signal processing configuration of a first signal of the target signal is associated with target signal processing configuration of a second signal of the target signal; at least one of a first signal processing period, a processing time window, a processing position offset, or the number of processing times of a first signal of the target signal is associated with at least one of a first signal processing period, a processing time window, a processing position offset, or the number of processing times of a second signal of the target signal; at least one of a processing period, a processing time window, a processing position offset, or the number of processing times of a low-power wake-up signal of a first signal of the target signal is associated with at least one of a processing period, a processing time window, a processing position offset, or the number of processing times of a low-power synchronization signal of the first signal of the target signal; target signal processing configuration of a low-power wake-up signal of a first signal of the target signal is associated with target signal processing configuration of a low-power synchronization signal of the first signal of the target signal; a processing period of a low-power wake-up signal of the target signal is X times a processing period of a low-power synchronization signal of the target signal; a processing period of a low-power wake-up signal of the target signal is X times a processing period of a second signal of the target signal, wherein X comprises at least one of 1/4, 1/8, 1/16, 1/2, 1, 2, 4, 8, 16; a processing period of a low-power wake-up signal of the target signal is greater than or equal to a processing period of a low-power synchronization signal of the target signal; a processing period of a low-power wake-up signal of the target signal is greater than or equal to a processing period of a second signal of the target signal; a processing period or a processing time window of a low-power wake-up signal of the target signal is different from a processing period or a processing time window of a low-power synchronization signal of the target signal; a processing period or a processing time window of a low-power wake-up signal of the target signal is different from a processing period or a processing time window of a second signal of the target signal; a processing period or a processing time window of a low-power wake-up signal of the target signal is the same as a processing period or a processing time window of a low-power synchronization signal of the target signal; a processing period or a processing time window of a low-power wake-up signal of the target signal is the same as a processing period or a processing time window of a second signal in the target signal; a processing position offset of a low-power wake-up signal of the target signal is different from a processing position offset of a low-power synchronization signal of the target signal; a processing position offset of a low-power wake-up signal in the target signal is different from a processing position offset of a second signal of the target signal; a processing position offset of a low-power wake-up signal of the target signal is the same as a processing position offset of a low-power synchronization signal of the target signal; or a processing position offset of a low-power wake-up signal of the target signal is the same as a processing position offset of a second signal of the target signal.

In this embodiment of the present application, the target signal processing configuration such as the processing period, the processing time window, the offset of the processing position, and the number of processing times corresponding to the first signal may have an association relationship with the target signal processing configuration corresponding to the second signal. The association relationship may include that the target signal processing configuration of the first signal and the target signal processing configuration of the second signal may be the same, or have a multiple relationship, or have a subset relationship. For example, the value of the measurement period of the first signal is a multiple of the value of the measurement period of the second signal, or the value of the measurement period of the second signal is a subset of the value of the measurement period of the first signal.

The first signal includes a low-power wake-up signal and a low-power synchronization signal. The target signal processing configuration such as the processing period, the processing time window, the offset of the processing position, and the number of processing times corresponding to the low-power wake-up signal may have an association relationship with the target signal processing configuration corresponding to the low-power synchronization signal. The processing period of the low-power wake-up signal is X times the processing period of the low-power synchronization signal.

In an example embodiment, the processing period of the low-power wake-up signal is X times the processing period of the low-power synchronization signal. X is at least one of 1/4, 1/8, 1/16, 1/2, 1, 2, 4, 8, or 16. For example, the processing period of the low-power wake-up signal is 1/2 of the processing period of the low-power synchronization signal, so when the processing period of the low-power wake-up signal is 10 ms, the processing period of the low-power synchronization signal is 20 ms; the processing period of the low-power wake-up signal of the target signal is greater than or equal to the processing period of the low-power synchronization signal; the processing period of the low-power wake-up signal is greater than or equal to the processing period of the second signal of the target signal; the processing period or the time window of the low-power wake-up signal is different from that of the low-power synchronization signal; the processing period or the time window of the low-power wake-up signal is different from that of the second signal of the target signal; the processing period or the time window of the low-power wake-up signal is the same as that of the low-power synchronization signal; the processing period or the time window of the low-power wake-up signal is the same as that of the second signal of the target signal; the offset of the processing position of the low-power wake-up signal is different from that of the low-power synchronization signal; the offset of the processing position of the low-power wake-up signal is different from that of the second signal of the target signal; the offset of the processing position of the low-power wake-up signal is the same as that of the low-power synchronization signal; and the offset of the processing position of the low-power wake-up signal is the same as that of the second signal of the target signal.

In some embodiments of the present application, different thresholds, different offsets, and different reference values correspond to different values; or correspond to different parameters; or correspond to the same parameters but different values.

Further, based on the previous embodiments of the present application, the method also includes determining the target signal according to the capability of the first communication node or processing different target signals by first communication nodes with different capabilities.

In this embodiment of the present application, the first communication node may process a corresponding target signal according to the capability of the first communication node. For example, the first communication node with the capability of receiving an on-off keying (OOK) waveform may process a target signal of an OOK waveform, and the first communication node with the orthogonal frequency division multiplexing (OFDM) waveform capability may process a target signal of an OFDM waveform.

Further, based on the previous embodiments of the present application, performing the processing according to the target signal and the configuration includes processing, by the first communication node, a first signal and a second signal of the target signal; processing, by the first communication node, a first signal or a second signal of the target signal; triggering, by the first communication node, processing of a second signal of the target signal according to processing of a first signal of the target signal.

In this embodiment of the present application, the first communication node may process both the first signal and the second signal, the first communication node may process the first signal or the second signal according to the target signal, the first communication node may process only the first signal, or the first communication node may process only the second signal. The first communication node triggers processing of the second signal according to processing of the first signal of the target signal. The first communication node processes the first signal according to the target signal and may switch to the target signal to process the second signal. Further, based on the previous embodiments of the present application, the first communication node may switch measurement of the first signal to processing of the second signal. For example, when the measurement value of the first signal is less than the threshold, the first communication node may switch to processing of the second signal. The switching may include a margin time gap. That is, the first communication node waits for a margin time gap to start measurement of the second signal after measurement of the first signal ends. The processing may include measurement of the target signal and monitoring of the target signal.

In an example embodiment, the first signal is a low-power synchronization signal, and the second signal is a primary synchronization signal (PSS)/a secondary synchronization signal (SSS)/a demodulation reference signal (DMRS)/a synchronization signal block (SSB). Based on the measurement of the first signal, when the signal strength, the signal received power, the signal quality, or the signal received quality does not satisfy measurement-related configuration requirements, the measurement of the second signal is triggered.

In an example embodiment, the first communication node has the WUR2 capability, the first signal is a low-power synchronization signal, and the second signal is a PSS/SSS/DMRS/SSB. The node may perform measurement or monitoring based on the first signal and/or the second signal.

Further, based on the previous embodiments of the present application, triggering, by the first communication node, processing of the second signal of the target signal according to processing of the first signal of the target signal satisfies at least one of the following conditions: signal strength or signal quality of the first signal does not satisfy a threshold; signal strength or signal quality of the first signal does not satisfy a threshold within a specific time; signal strength or signal quality of the first signal does not satisfy a threshold within a first preset processing quantity; reference signal received power or reference signal received quality of the first signal does not satisfy a threshold; reference signal received power or reference signal received quality of the first signal does not satisfy a threshold within a specific time; reference signal received power or reference signal received quality of the first signal does not satisfy a threshold within a second preset processing quantity; signal strength, signal received power, signal quality, or signal received quality of the first signal does not satisfy measurement-related configuration; or signal strength, signal received power, signal quality, or signal received quality of the first signal does not satisfy at least one of the following: cell selection, cell reselection, being not at a cell edge, low mobility, or being stationary.

In this embodiment of the present application, in the case where a specific condition is satisfied, the first communication node triggers the measurement of the second signal based on the measurement of the first signal. The specific condition may include that signal strength or signal quality of the first signal does not satisfy a configured threshold; signal strength or signal quality of the first signal does not satisfy a configured threshold within a specific time; signal strength or signal quality of the first signal does not satisfy a configured threshold within a first preset processing quantity. For example, signal strength or signal quality of the first signal may be sampled. In the sampling, signal strength or signal quality of the first signal does not satisfy a configured threshold within a first preset processing quantity; reference signal received power or reference signal received quality of the first signal does not satisfy a configured threshold; reference signal received power or reference signal received quality of the first signal does not satisfy a configured threshold within a specific time; reference signal received power or reference signal received quality of the first signal does not satisfy a configured threshold within a second preset processing quantity. Alternatively, at least one of signal strength, signal received power, signal quality, or signal received quality of the first signal does not satisfy the measurement-related configuration. Alternatively, at least one of signal strength, signal received power, signal quality, or signal received quality of the first signal does not satisfy at least one of the following: cell selection, cell reselection, being not at a cell edge, low mobility, or being stationary. The measurement-related configuration includes a threshold, a processing quantity, and a specific time and may be configured by the base station, may be preconfigured, or may be predefined.

In an example embodiment, the signal strength or the signal quality of the first signal is less than or greater than a threshold. The threshold is predefined or configured by the base station. In this case, measurement of the second signal is triggered, or exit of the measurement relaxation mode is triggered, or measurement fallback is triggered, that is, fallback to normal measurement based on the second signal.

In some embodiments of the present application, triggering, by the first communication node, processing of the second signal of the target signal according to processing of the first signal of the target signal includes at least one of the following: a processing period of the second signal is greater than a processing period of the first signal; the number of processing times of the second signal is less than the number of processing times of the first signal; a processing offset of the second signal is less than a processing period of the first signal; a processing duration of the second signal is less than a processing duration of the first signal; or at least one of a processing period, the number of processing times, a processing position offset, or a processing duration of the second signal is associated with at least one of a processing period, the number of processing times, a processing position offset, or a processing duration of the first signal.

In this embodiment of the present application, the first communication node triggers processing of the second signal based on processing of the first signal in at least one of the following conditions: The processing period of the second signal is greater than the processing period of the first signal; the number of processing times of the second signal is less than the number of processing times of the first signal; the processing duration of the second signal is less than the processing duration of the first signal; or the processing period, the number of processing times, the offset of the processing position, or the processing duration of the second signal is associated with that of the first signal.

In an example embodiment, the monitoring period of the second signal is greater than the monitoring period of the first signal, or the measurement period of the second signal is greater than the measurement period of the first signal; and the number of detections/measurements/monitoring times of the second signal is less than that of the first signal. The detection offset/measurement offset/monitoring offset of the second signal is less than the detection period/measurement period/monitoring period of the first signal. The detection duration/measurement duration/monitoring duration of the second signal is less than that of the first signal. The detection period/measurement period/monitoring period of the second signal and the detection period/measurement period/monitoring period of the first signal have a fixed offset, or an association relationship, and the two are similar in the number of processing times, the offset of the processing position, or the processing duration.

Further, based on the previous embodiments of the present application, processing different target signals by the first communication nodes with different capabilities includes performing signal processing, by a first communication node with a first capability, according to a first signal of the target signal and performing signal processing, by a first communication node with a second capability, according to a second signal of the target signal; performing signal processing, by a first communication node with a first capability, according to a first signal of the target signal; performing signal processing, by a first communication node with a second capability, according to a first signal and/or a second signal of the target signal.

In this embodiment of the present application, the first communication node with the first capability may perform signal processing on the first signal of the target signal, and the first communication node with the second capability may perform signal processing on the second signal of the target signal. That is, the first communication node has the first capability and the second capability and may perform signal processing on the first signal and signal processing on the second signal based on the first capability and the second capability respectively. Alternatively, the first communication node with the first capability may perform signal processing on the first signal of the target signal. Alternatively, the first communication node with the second capability may perform signal processing on at least one of the first signal or the second signal of the target signal.

In an example embodiment, the UE with the WUR1 capability may process LP-SS, the UE with the WUR2 capability may process PSS/SSS/DMRS/SSB, and the UE with the WUR2 capability may also process LP-SS.

Further, based on the previous embodiments of the present application, a first period of measurement of the target signal is determined according to a second period.

In this embodiment of the present application, signal measurement may be performed according to the target signal and the configuration. The first period during the signal measurement may be determined according to the second period.

Further, based on the previous embodiments of the present application, the first period of the processing of the target signal is determined according to the second period in the following manner: the second period is a period of serving cell measurement and/or neighboring cell measurement of the second signal, and the first period is a measurement period of the first signal of the target signal or a measurement period of the second signal of the target signal. The first period is less than or equal to the second period, or the first period is an integer divisor of the second period.

In this embodiment of the present application, the second period may be the period of serving cell measurement or neighboring cell measurement based on the second signal, and the first period is the measurement period of measurement performed based on the first signal or the second signal. The first period may be less than or equal to the second period, or the first period may be an integer divisor of the second period.

In an example embodiment, the period of serving cell and/or neighboring cell measurement based on PSS/SSS/DMRS/channel state information-reference signal (CSI-RS)/SSB measurement is X1, that is, the second period. The first period is a period based on LP-SS, X2. X2 ≤ X1 or X1/X2 or X2/X1 is an integer.

Further, based on the previous embodiments of the present application, the first period of the processing of the target signal is determined according to the second period in the following manner: the second period and the first period are each a period of serving cell measurement and/or neighboring cell measurement. The first period is greater than or equal to the second period, or the second period is an integer divisor of the first period.

In this embodiment of the present application, both the first period and the second period may be the period of serving cell measurement or neighboring cell measurement, and the first period and the second period may satisfy that the first period is greater than or equal to the second period, or the first period and the second period may satisfy that the second period is an integer divisor of the first period.

In an example embodiment, the period of serving cell and/or neighboring cell measurement based on PSS/SSS/DMRS/CSI-RS/SSB measurement is Y2, that is, the second period. The period of serving cell and/or neighboring cell measurement based on PSS/SSS/DMRS/CSI-RS/SSB measurement is the first period Y1. Y2 ≤ Y1 or Y1/Y2 or Y2/Y1 is an integer. This scenario corresponds to exit of measurement relaxation and returning to a normal measurement period, or this scenario corresponds to measurement fallback.

In this embodiment of the present application, the second period and the first period are each the period of the serving cell measurement and/or the neighboring cell measurement in one of the following manners: the first period is the period of the serving cell measurement, and the second period is the period of the serving cell measurement, where the first period is X times the second period, and X is greater than 0; or the first period is the period of the neighboring cell measurement, and the second period is the period of the neighboring cell measurement, where the first period is Y times the second period, Y is greater than 0, and the value of X and the value of Y are predefined or determined by configuration of a second communication node.

In this embodiment of the present application, when the first period is the period of serving cell measurement and the second period is also the period of serving cell measurement, the first period may be X times the second period. Alternatively, when the first period is the period of neighboring cell measurement and the second period is also the period of neighboring cell measurement, the first period may also be Y times the second period. It is to be understood that the value of X and the value of Y may each be predefined or configured by the second communication node. In some embodiments of the present application, the value of X and the value of Y are different. In some other embodiments, the value of X and the value of Y may be the same, or X and Y may use the same parameter.

In an example embodiment, the first period is the period of serving cell measurement based on LP-SS, and the second period is the period of serving cell measurement based on PSS/SSS/DMRS/CSI-RS/SSB. The two have a multiple relationship. The multiple may be an integer or may be a fraction.

Based on the previous embodiments of the present application, the target signal includes at least one of the first signal or the second signal in at least one of the following manners: a measurement period of the first signal of the target signal is less than or equal to a measurement period of the second signal of the target signal; a measurement period of the first signal of the target signal is M times a measurement period of the second signal of the target signal, where M includes at least one of 1/2, 1/4, 1/8, 1/16, 1/32, 1, 2, 4, 8, 16, 32, or 64; or a measurement period of the first signal of the target signal is determined by a first parameter, and a measurement period of the second signal of the target signal is determined by a second parameter.

In this embodiment of the present application, when the target signal is measured, the measurement period of the first signal of the target signal may be less than or equal to the measurement period of the second signal; or the measurement period of the first signal may be M times the measurement period of the second signal, where M may be at least one of 1/2, 1/4, 1/8, 1/16, 1/32, 1, 2, 4, 8, 16, 32, 64; or the measurement period of the first signal of the target signal may be determined by a first parameter, and the measurement period of the second signal of the target signal may be determined by a second parameter, where the first parameter and the second parameter may be configured parameters related to the period.

Further, the first communication node switches from performing measurement based on the first signal to performing measurement based on the second signal. At least one of a frequency point, a carrier, or a frequency band of the first signal may be the same as or different from that of the second signal. The switching includes reserving a time gap, that is, after ending measurement of the first signal, the first communication node waits for the reserved time gap and then performs measurement based on the second signal.

FIG. 3 is a flowchart of a signal processing method according to embodiments of the present application. Referring to FIG. 3, this embodiment of the present application can be applied to a scenario in which a terminal device processes a low-power wake-up signal. The method is generally applied to a second communication node. The second communication node may include a base station. The method of this embodiment of the present application includes the following:
In step 210, a target signal and configuration are transmitted.

In this embodiment of the present application, the second communication node may transmit the target signal and the configuration to a first communication node.

Based on the previous embodiments of the present application, the configuration includes at least one of the following: target signal processing configuration or measurement-related configuration. The measurement-related configuration includes at least one of the following: a threshold, an offset, or a reference value.

Further, based on the previous embodiments of the present application, the measurement-related configuration includes at least one of the following: first communication nodes with different capabilities are different in configured threshold or configured threshold parameter; first communication nodes with different capabilities are the same in configured threshold parameter and different in configured threshold; first communication nodes with different capabilities are different in configured offset or configured offset parameter; first communication nodes with different capabilities are the same in configured offset parameter and different in configured offset; first communication nodes with different capabilities are different in configured reference value or configured reference value parameter; first communication nodes with different capabilities are the same in configured reference value parameter and different in configured reference value; or first communication nodes with different capabilities are different in configured target signal processing configuration.

In an example embodiment, two thresholds are defined for the UE with the WUR1 capability and the UE with the WUR2 capability, including two different thresholds or two different threshold parameters.

For example, the measured reference signal receiving power (RSRP) for the UE with the WUR1 capability and the RSRP for the UE with the WUR2 capability are configured with thresholds: Srxlev ≤ S1 for WUR1 and Srxlev ≤ S2 for WUR2. Srxlev may represent a received power class value selected by a serving cell. For example, for the two WURs, the measured RSRQ has thresholds: Squal ≤ Q1; Squal ≤ Q2; [Srxlev ≤ SnonIntraSearchP or Squal ≤ SnonIntraSearchQ].

For example, Srxlev ≤ SnonIntraSearchP, but UEs with different WUR capabilities may be different in SnonIntraSearchP. That is, UEs with different WUR capabilities are the same in threshold parameter but different in value. The same goes to offset or reference value.

In an example embodiment, for the UE with the WUR1 capability and the UE with the WUR2 capability, different thresholds or threshold parameters are defined, or two serving cell selection criteria are defined.

For example: for the UE with the WUR1 capability, it is required to satisfy Srxlev > C1 AND Squal > C2; For the UE with the WUR2 capability, it is required to satisfy Srxlev > C3 AND Squal > C4. C3 and C1 may be different. C4 and C2 may be different.

In this embodiment of the present application, for first communication nodes with different capabilities, different configurations may be transmitted. The different configurations may include at least one of a threshold, a threshold parameter, an offset, an offset parameter, a reference value, a reference value parameter, or target signal processing configuration. Alternatively, first communication nodes with different capabilities are the same in configured parameter value, configured offset parameter, and configured reference value parameter, but the configured parameter value parameter, the configured offset parameter, and the configured reference value parameter are different in value.

Based on the previous embodiments of the present application, the target signal includes a first signal and a second signal. The first signal includes an idle state function signal. The second signal includes at least one of a connected state function signal, an inactive state function signal, or a terminal-specific configuration function signal. The terminal-specific configuration function signal includes a terminal-specific idle state function signal, a terminal-specific connected state function signal, and a terminal-specific inactive state function signal; or the first signal includes a function signal of a specific reception point, and the second signal includes a function signal of a specific area or cell; or the first signal includes a terminal-specific function signal, and the second signal includes a group-specific function signal; or the first signal includes a cell function signal, the second signal includes an area function signal, and the area includes at least one cell. The function signal includes at least one of a measurement signal, a synchronization signal, or a positioning signal.

Based on the previous embodiments of the present application, the configuration or the usage of the configuration includes at least one of the following: the measurement-related configuration is configured to determine signal strength, signal received power, signal quality, or signal received quality; the measurement-related configuration is configured to compare signal strength, signal received power, signal quality, or signal received quality; or the measurement-related configuration is configured to determine a difference or compare a difference.

Based on the target signal, the measurement-related configuration is configured to determine signal strength, signal received power, signal quality, or signal received quality. Based on the target signal, the measurement-related configuration is configured to compare signal strength, signal received power, signal quality, or signal received quality. Based on the target signal, the measurement-related configuration is configured to determine a difference or compare a difference. Based on the target signal, the measurement-related configuration is configured to determine signal strength or compare signal received power. Based on the target signal, the measurement-related configuration is configured to determine signal quality or compare signal received quality. Based on the target signal, the measurement-related configuration is configured to compare a difference.

The measurement-related configuration is configuration related to the target signal.

In this embodiment of the present application, the predefined measurement-related configuration or the measurement-related configuration transmitted by the second communication node may be configured to determine signal strength, signal received power, signal quality, or signal received quality; or the measurement-related configuration may be configured to determine a signal strength difference, a signal received power difference, or a signal received quality difference; or the measurement-related configuration may be configured to determine a difference or compare a difference. Based on the target signal, the measurement-related configuration is configured to determine signal strength, signal received power, signal quality, or signal received quality. Based on the target signal, the measurement-related configuration is configured to compare signal strength, signal received power, signal quality, or signal received quality. Based on the target signal, the measurement-related configuration is configured to determine a difference or compare a difference. Based on the target signal, the measurement-related configuration is configured to determine signal strength or compare signal received power. Based on the target signal, the measurement-related configuration is configured to determine signal quality or compare signal received quality. Based on the target signal, the measurement-related configuration is configured to compare a difference.

Based on the previous embodiments of the present application, the target-signal-related configuration includes at least one of the following: the measurement-related configuration is configured to determine at least one of the following: cell selection/reselection, being not at a cell edge, low mobility, or being stationary; or the measurement-related configuration is configured to determine at least one of the following: serving cell measurement, neighboring cell measurement, intra-frequency cell measurement, inter-frequency cell measurement, measurements of inter-RAT E-UTRAN cells, measurement fallback, or measurement relaxation.

### (1) For determination of low mobility:

(Srxlev_{Ref} - Srxlev) < S_{SearchDeltaP1}. (Srxlev_{Ref} - Srxlev) < S_{SearchDeltaP2}. S_{SearchDeltaP1} and S_{SearchDeltaP2} are configured for the UE with the WUR1 capability and the UE with the WUR2 capability respectively.

Specifically, the values of S_{SearchDeltaP1} and S_{SearchDeltaP2} may be obtained in at least one of the following manners: S_{SearchDeltaP1} and S_{SearchDeltaP2} may be obtained by configuration of two parameters. S_{SearchDeltaP1} and S_{SearchDeltaP2} may be obtained by configuration of one parameter and one offset. For example, S_{SearchDeltaP1} = S_{SearchDeltaP2} + offset or S_{SearchDeltaP2} = S_{SearchDeltaP1} + offset. S_{SearchDeltaP1} and S_{SearchDeltaP2} may be obtained by configuration of only one parameter. For example, the offset is a default value. S_{SearchDeltaP1} and S_{SearchDeltaP2} are a pair of associated values. S_{SearchDeltaP1} ≥ SSearchDeltaP2. SsearchDeltaPl ≤ SsearchDeltaP2.

### (2) For determination of being not at a cell edge:

The terminal relaxation measurement criterion satisfying being not at a cell edge: Srxlev > Ss_{earchThresholdP} and Squal > S_{SearchThresholdQ}, if S_{SearchThresholdQ} is configured. Srxlev = The current Srxlev value (dB) of the serving cell. Squal = The current Squal value (dB) of the serving cell.

Ss_{earchThresholdP1} and S_{SearchThresholdQ1} are configured for the UE with the WUR1 capability. S_{SearchThresholdP2} and S_{SearchThresholdQ2} are configured for the UE with the WUR2 capability.

(3) For determination of a stationary terminal, the measurement relaxation criterion of being stationary is satisfied:
(Srxlev_{RefStationary} - Srxlev) < S_{SearchDeltaP-Stationary}. Srxlev = The current Srxlev value (dB) of the serving cell.

Srxlev_{RefStationary} = The reference Srxlev value 1 (dB) of the serving cell. At least one of the following is set: after selection or reselection of the serving cell; if (Srxlev-Srxlev_{RefStationary}) > 0; if the relaxation measurement criterion of T_{SearchDeltaP-Stationary} is not satisfied: the terminal sets the value of Srxlev_{RefStationary} as the current Srxlev value of the serving cell.

T_{SearchDeltaP-Stationary1} and T_{SearchDeltaP-Stationary2} are configured for the UE with the WUR1 capability and the UE with the WUR2 capability respectively.

(4) For determination of a terminal that is stationary and not at the edge of the cell, the satisfied measurement relaxation criteria include the following.

T_{SearchDeltaP-Stationary}, Srxlev > S_{SearchThresholdP2}, and Squal > S_{SearchThresholdQ2}, if S_{SearchThresholdQ2} is configured.

Srxlev = The current Srxlev value of the serving cell. Squal = The current Squal value of the serving cell.

T_{SearchDeltaP-Stationary} 1 and T_{SearchDeltaP-Stationary} 2 are configured for the UE with the WUR1 capability and the UE with the WUR2 capability respectively.

S_{SearchThresholdP2-1} and S_{SearchThresholdQ2-1} are configured for the UE with the WUR1 capability.

SS_{earchThresholdP2-2} and S_{SearchThresholdQ2-2} are configured for the UE with the WUR2 capability.

(5) For determination of the serving cell measurement, the neighboring cell measurement, the intra-frequency cell measurement, the inter-frequency cell measurement, and the measurements of inter-RAT E-UTRAN cells, the satisfied conditions are similar, that is, the signal strength, the signal received power, the signal quality, or the signal received quality satisfies the condition of being greater than, equal to, or less than a threshold or a difference. Alternatively, after an offset is applied to the signal strength, the signal received power, the signal quality, or the signal received quality, the condition of being greater than, equal to, or less than a threshold or a difference is satisfied.

### (6) For determination of measurement fallback and measurement relaxation

The measurement fallback includes exiting the measurement of the first signal and using the measurement of the second signal. The measurement fallback includes exiting the mode of measurement relaxation.

The measurement relaxation includes increasing the measurement period of the neighboring cell or the serving cell and performing serving cell measurement by using the first signal.

Determination of the measurement fallback includes: Through measurement of the first signal, the signal strength, the signal received power, the signal quality, or the signal received quality does not satisfy the condition of being greater than, equal to, or less than a threshold or a difference; or after an offset is applied to the signal strength, the signal received power, the signal quality, or the signal received quality, the condition of being greater than, equal to, or less than a threshold or a difference is not satisfied. In this case, exiting the measurement of the first signal is performed, and returning to the normal measurement mode is performed.

Determination of the measurement relaxation includes that based on the measurement of the first signal and/or the measurement of the second signal, the signal strength, the signal received power, the signal quality, or the signal received quality satisfies the condition related to the measurement-related configuration. In this case, the first communication node performs measurement based on the relaxed measurement period of the neighboring cell or the serving cell.

Based on the previous embodiments of the present application, the target signal processing configuration includes at least one of the following: a processing period, a processing time window, a processing position offset, or the number of processing times.

Based on the previous embodiments of the present application, the method also includes at least one of the following: a processing period, a processing time window, and the number of processing times of a first signal of the target signal and a processing period, a processing time window, and the number of processing times of a second signal of the target signal are the same, or have a multiple relationship, or have a subset relationship; a processing position offset of a first signal of the target signal is the same as a processing position offset of a second signal of the target signal; target signal processing configuration of a first signal of the target signal is associated with target signal processing configuration of a second signal of the target signal; at least one of a first signal processing period, a processing time window, a processing position offset, or the number of processing times of a first signal of the target signal is associated with at least one of a first signal processing period, a processing time window, a processing position offset, or the number of processing times of a second signal of the target signal; at least one of a processing period, a processing time window, a processing position offset, or the number of processing times of a low-power wake-up signal of a first signal of the target signal is associated with at least one of a processing period, a processing time window, a processing position offset, or the number of processing times of a low-power synchronization signal of the first signal of the target signal; target signal processing configuration of a low-power wake-up signal of a first signal of the target signal is associated with target signal processing configuration of a low-power synchronization signal of the first signal of the target signal; a processing period of a low-power wake-up signal of the target signal is X times a processing period of a low-power synchronization signal of the target signal; a processing period of a low-power wake-up signal of the target signal is X times a processing period of a second signal of the target signal, wherein X comprises at least one of 1/4, 1/8, 1/16, 1/2, 1, 2, 4, 8, 16; a processing period of a low-power wake-up signal of the target signal is greater than or equal to a processing period of a low-power synchronization signal of the target signal; a processing period of a low-power wake-up signal of the target signal is greater than or equal to a processing period of a second signal of the target signal; a processing period or a processing time window of a low-power wake-up signal of the target signal is different from a processing period or a processing time window of a low-power synchronization signal of the target signal; a processing period or a processing time window of a low-power wake-up signal of the target signal is different from a processing period or a processing time window of a second signal of the target signal; a processing period or a processing time window of a low-power wake-up signal of the target signal is the same as a processing period or a processing time window of a low-power synchronization signal of the target signal; a processing period or a processing time window of a low-power wake-up signal of the target signal is the same as a processing period or a processing time window of a second signal in the target signal; a processing position offset of a low-power wake-up signal of the target signal is different from a processing position offset of a low-power synchronization signal of the target signal; a processing position offset of a low-power wake-up signal in the target signal is different from a processing position offset of a second signal of the target signal; a processing position offset of a low-power wake-up signal of the target signal is the same as a processing position offset of a low-power synchronization signal of the target signal; or a processing position offset of a low-power wake-up signal of the target signal is the same as a processing position offset of a second signal of the target signal.

Based on the previous embodiments of the present application, the method also includes processing different target signals by first communication nodes with different capabilities.

In this embodiment of the present application, target signals sent by the second communication node may be different, and the different target signals may be processed by first communication nodes with different capabilities.

Based on the previous embodiments of the present application, processing different target signals by the first communication nodes with different capabilities includes at least one of the following: performing signal processing, by a first communication node with a first capability, according to a first signal of the target signal and performing signal processing, by a first communication node with a second capability, according to a second signal of the target signal; performing signal processing, by a first communication node with a first capability, according to a first signal of the target signal; performing signal processing, by a first communication node with a second capability, according to a first signal and/or a second signal of the target signal.

In this embodiment of the present application, the first communication node with the first capability may perform signal processing on the first signal of the target signal, and the first communication node with the second capability may perform signal processing on the second signal of the target signal; the first communication node with the first capability may perform signal processing on the first signal; the first communication node with the second capability may perform signal processing on at least one of the first signal or the second signal of the target signal.

Further, based on the previous embodiments of the present application, a first period of processing of the target signal is determined according to a second period.

Based on the previous embodiments of the present application, the first period of the processing of the target signal is determined according to the second period in the following manner: the second period is a period of serving cell measurement and/or neighboring cell measurement of the second signal, and the first period is a measurement period of the first signal of the target signal or a measurement period of the second signal of the target signal. The first period is less than or equal to the second period, or the first period is an integer divisor of the second period.

In some other embodiments of the present application, the first period of the processing of the target signal is determined according to the second period in the following manner: the second period and the first period are each a period of serving cell measurement and/or neighboring cell measurement. The first period is greater than or equal to the second period, or the second period is an integer divisor of the first period.

In this embodiment of the present application, the second period and the first period are each the period of the serving cell measurement and/or the neighboring cell measurement in the following manner: the first period is the period of the serving cell measurement, and the second period is the period of the serving cell measurement, where the first period is X times the second period, and X is greater than 0; or the first period is the period of the neighboring cell measurement, and the second period is the period of the neighboring cell measurement, where the first period is Y times the second period, Y is greater than 0, and the value of X and the value of Y are predefined or determined by configuration of a second communication node.

In some other embodiments of the present application, the target signal includes at least one of the first signal or the second signal in at least one of the following manners: a measurement period of the first signal of the target signal is less than or equal to a measurement period of the second signal of the target signal; a measurement period of the first signal of the target signal is M times a measurement period of the second signal of the target signal, where M includes at least one of 1/2, 1/4, 1/8, 1/16, 1/32, 1, 2, 4, 8, 16, 32, or 64; or a measurement period of the first signal of the target signal is determined by a first parameter, and a measurement period of the second signal of the target signal is determined by a second parameter.

In an example embodiment, a base station serves as a second communication node and a terminal serves as a first communication node. The signal processing of this embodiment of the present application may include the following process:
1. The base station monitors and controls different receivers of the terminal.

The terminal has a first wake-up receiver. For example, the first wake-up receiver includes an OOK receiver. The base station may perform monitoring barring on the first wake-up receiver. In this case, the terminal does not expect to send a low-power synchronization signal, or the terminal performs low-power wake-up serving cell measurement by using a demodulation reference signal, a primary synchronization signal, or a secondary synchronization signal.

The terminal has a second wake-up receiver. For example, the second wake-up receiver includes an OFDM receiver. The base station may perform monitoring barring on the second wake-up receiver. In this case, the base station sends a low-power synchronization signal to the terminal to ensure that the terminal normally receives a low-power wake-up signal.

The base station may send a barring indication to the terminal. The indication may include 1 bit or 2 bits. The barring indication may include an indication that the first wake-up receiver or the second wake-up receiver is allowed to monitor the low-power wake-up signal or an indication that the first wake-up receiver or the second wake-up receiver is run to monitor the low-power synchronization signal or the secondary synchronization signal.

By way of example, the barring indication may be shown as follows:

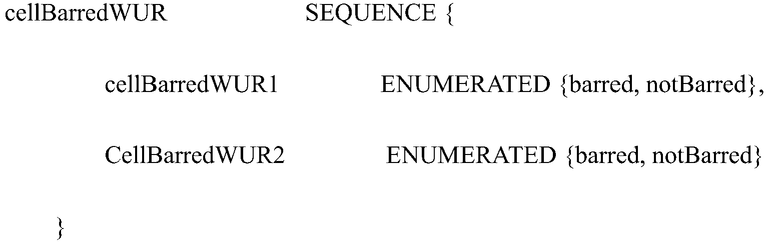

If cellBarredWUR1 in the acquired SIB1 is set to be barred, or if cellBarredWUR2 in the acquired SIB1 is set to be barred, the cell is set to be barred according to TS 38.304[20].

Alternatively, indication of barring or allow is performed by using 1 bit, to indicate whether the terminal that receives the low-power synchronization signal is allowed to access the cell. For example:

### LPSSWURAllowed ENUMERATED {true}

2. The base station controls monitoring for a specific group or a specific terminal.

The base station may indicate, through the SIB, that a low-power wake-up signal associated with a specific group can be monitored by the terminal.

The base station may indicate, through the SIB, that a low-power wake-up signal associated with a specific terminal can be monitored by the terminal.

For example, the base station may use 1 to 2 bits in the SIB to indicate different monitoring manners for the low-power wake-up signal, including a cell-specific manner, a group-specific manner, a terminal-specific manner, or coexistence of multiple manners.

For another example, the base station may use 1 bit to instruct the terminal to monitor the low-power wake-up signal in a group-specific manner or in a terminal-specific manner.

For still another example, the base station may use 2 bits to indicate a monitoring manner. "00" indicates a cell-specific wake-up manner. When the terminal receives "00" sent by the base station, the terminal monitors the low-power wake-up signal in the corresponding cell-specific wake-up manner. "11" indicates that a group-specific monitoring manner and a terminal-specific monitoring manner are applied in parallel, or a cell-specific monitoring manner may also be included. "10" or "01" indicates that the terminal monitors the low-power wake-up signal in one of a group-specific monitoring manner or a terminal-specific monitoring manner.

3. The base station controls monitoring according to function enabling.

When the base station enables the low-power wake-up signal function but does not configure a low-power synchronization signal, only the OFDM receiver of the terminal is allowed to monitor the low-power wake-up signal. When the base station enables the low-power wake-up signal function and configures a low-power synchronization signal, both the first wake-up receiver and the second wake-up receiver of the terminal are allowed to monitor the low-power wake-up signal.

The terminal capabilities enabled by the base station may include a first capability and a second capability. The first capability may be the defined terminal capability of the first receiver, indicating that the terminal can receive an OOK waveform signal, and this capability may be supported over a full frequency band. The second capability may be the defined terminal capability of the second receiver, indicating that the terminal can receive an OFDM waveform signal. The terminal with the second capability can receive an OOK-based waveform signal scrambled with a sequence and can also receive an OOK waveform signal. This capability may be supported for a full frequency band or for the entire terminal.

The terminal capabilities may also include the capability of supporting a measurement time gap, that is, an inter-frequency measurement capability. The measurement time gap may correspond to a period of time during which the terminal neither transmits nor receives data, but instead tunes its receiver to a target frequency point to perform further operations. In some embodiments of the present application, the OOK-based first wake-up receiver and the OFDM-based second wake-up receiver may have measurement time gaps of different durations.

In some embodiments of the present application, the terminal capabilities may also include whether an independent radio-frequency circuit is used, whether a shared radio-frequency circuit is used, and whether the time required for switching a wake-up receiver frequency to a main frequency is taken into account.

In this embodiment of the present application, the base station may transmit configuration to the terminal. The configuration may correspond to the terminal capability. When the terminal has multiple capabilities, a respective configuration may be provided for each capability. For example, when the terminal has both the OOK reception capability and the OFDM reception capability, two sets of parameters may be defined: One set of parameters are configured for a first terminal receiving an OOK signal, and the other set of parameters are configured for a second terminal receiving an OFDM signal. Alternatively, these may be referred to as a terminal configured with a first feature and a terminal configured with a second feature. It is to be understood that in some embodiments of the present application, the first terminal and the second terminal may be the same terminal. The configuration may include a threshold, the number of samples, measurement criteria, and serving cell selection criteria. The configuration may include defining two measurement relaxation criteria for the first wake-up receiver and the second wake-up receiver.

For the OOK receiver, namely the first wake-up receiver (WUR), the measurement relaxation criteria or conditions to be satisfied may be the same as or different from those of the OFDM receiver, namely the second wake-up receiver (WUR).

For example, the measurement relaxation criteria for the first WUR may include being not at a cell edge and being stationary or having low mobility. The measurement relaxation criteria for the second WUR may include being stationary or having low mobility, regardless of whether the terminal is at a cell edge.

In some embodiments of the present application, settings of the measurement relaxation multiple may include:

### 1. A multiple of serving cell measurement relaxation:

The UE shall measure the SS-RSRP and SS-RSRQ levels of the serving cell and evaluate the cell selection criterion S defined for the serving cell in TS 38.304[1] once at least every X*M1*N1 DRX cycles. If the SMTC period (T_{SMTC}) > 20 ms and the DRX cycle ≤ 0.64 second, M1 = 2; otherwise, M1 = 1. The value of X may also include values 1/4, 1/8, 1/16, 1/2, 1, 2, 4, 8, and 16. Alternatively, X may be different values according to different configurations. For example, for the terminal with the first wake-up receiver capability, the value is X1, and for the terminal with the second wake-up receiver capability, the value is X2. X1 and X2 may be the same or different; or X1 is greater than or equal to X2, or X1 is less than or equal to X2.

### 2. A multiple of neighboring cell measurement relaxation:

(1) For neighboring cell measurement, it is required to ensure that the neighboring cell measurement period is greater than or equal to the serving cell measurement period.
(2) For neighboring cell measurement, measurement relaxation is implemented by using the X value that is the same as the relaxation multiple of the serving cell.

For neighboring cell measurement, measurement relaxation is performed based on a configured parameter Y and includes at least one of the following:
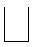 For intra-cell neighboring cell measurement, the period is relaxed to Y*T_{measure,NR_Intra}.

The terminal identifies and measures the intra-frequency serving cell according to the measurement rule at least every Y*Tₘₑₐₛᵤᵣₑ,_{NR}_Intra.

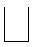 For inter-cell neighboring cell measurement, the period is relaxed to Y*T_{higher_priority_search}.

If Srxlev > S_{nonIntraSearchP} and Squal > S_{nonIntraSearchQ}, the terminal should search for a higher inter-frequency layer at least every Y*T_{higher_priority_search}, where T_{higher_priority_search} is preconfigured.

3. There is no need to relax neighboring cell measurement.

If the serving cell still satisfies the serving cell measurement relaxation condition, the terminal is not required to perform neighboring cell measurement. When the serving cell no longer satisfies the serving cell measurement relaxation condition, the primary frequency is woken up. In this case, a normal process may be performed.

In this embodiment of the present application, the capability of the terminal is required to satisfy a specific delay or a reserved time gap requirement during switching.

For example, after receiving LP-WUS at different frequencies, the terminal is required to switch back to the main frequency. In this case, a gap may be required. If the radio frequency (RF) is independent, if the RF of the wake-up receiver of the terminal is independent of the MR, the gap may not be required.

For example, after performing measurement based on LP-SS/PSS/SSS, the terminal is required to switch back to the MR. In this case, a gap may be required. If the RF of the WUR is independent of the MR, the gap may not be required.

For example, based on that the WUR of the OFDM receiver first receives LP-SS for measurement and then jumps to another frequency to receive PSS/SSS, the time of the gap is required to be met. Alternatively, based on that the WUR of the OFDM receiver first receives PSS/SSS for measurement and then jumps to another frequency to receive LP-SS, the time of the gap is required to be met. If the RF of the WUR is independent of the MR, the gap may not be required.

In the preceding embodiment of the present application, the gap is defined in time units such as milliseconds, microseconds, Ts, slots, or symbols. Gap parameters include gap duration, a mode, an offset, a start position, or are distinguished from a high frequency and a low frequency and are distinguished from FR1 and FR2.

For the UE with the WUR1 capability, if the base station configures LP-SS, the UE may perform serving cell measurement by using LP-SS. If the measurement relaxation requirements are satisfied, serving cell and/or neighboring cell measurement relaxation may be performed. In the measurement relaxation state, the wake-up receiver continues performing measurement by using LP-SS. When LP-SS does not satisfy the measurement relaxation condition, for example, when RSRP/RSRQ does not satisfy a threshold, the UE exits the measurement relaxation mode.

For the UE with the second wake-up receiver, the base station is required to configure which reference signal is to be used by the UE in measurement, for example, whether LP-SS or SSS/PSS is used. For example, the base station may indicate through RRC signaling or SIB signaling whether the reference signal used for measurement by the UE with the second wake-up receiver is LP-SS or SSS/PSS. The UE determines, according to the configuration of the base station, whether to perform measurement based on LP-SS or PSS/SSS.

Further, in the measurement relaxation state, the wake-up receiver continues performing measurement by using LP-SS. When LP-SS does not satisfy the measurement relaxation condition, for example, RSRP/RSRQ does not satisfy a threshold, the wake-up receiver chooses to perform measurement by using PSS/SSS. If the measurement relaxation condition is still not satisfied, the UE exits the measurement relaxation mode.

Further, in the measurement relaxation state, the wake-up receiver continues performing measurement by using PSS/SSS. When PSS/SSS does not satisfy the measurement relaxation condition, for example, RSRP/RSRQ does not satisfy a threshold, the wake-up receiver chooses to perform measurement by using LP-SS. If the measurement relaxation condition is still not satisfied, the UE exits the measurement relaxation mode. Alternatively, when PSS/SSS does not satisfy the measurement relaxation condition, for example, RSRP/RSRQ does not satisfy a threshold, the UE exits the measurement relaxation mode. Different modes may be implemented through configuration by the base station.

FIG. 4 is a diagram illustrating the structure of a signal processing apparatus according to embodiments of the present application. The apparatus can perform the signal processing method of any embodiment of the present application and has function modules and beneficial effects corresponding to the performed method. The apparatus may be implemented by software and/or hardware and is generally applied to a first communication node, for example, a terminal. As shown in FIG. 4, the apparatus of this embodiment of the present application includes a processing module 301 configured to perform processing according to a target signal and configuration. The processing includes at least one of the following: measurement of the target signal or monitoring of the target signal.

FIG. 5 is a diagram illustrating the structure of a signal processing apparatus according to embodiments of the present application. The apparatus can perform the signal processing method of any embodiment of the present application and has function modules and beneficial effects corresponding to the performed method. The apparatus may be implemented by software and/or hardware and is generally applied to a second communication node, for example, a base station. As shown in FIG. 5, the apparatus of this embodiment of the present application includes a transmission module 401 configured to transmit a target signal and configuration.

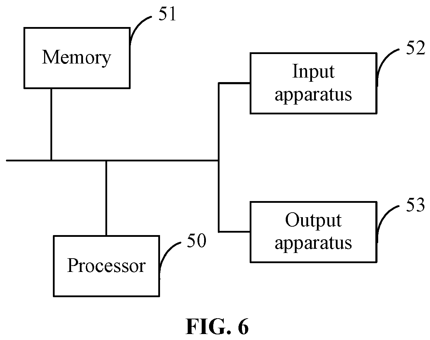

FIG. 6 is a diagram illustrating the structure of an electronic device according to embodiments of the present application. The electronic device includes a processor 50, a memory 51, an input apparatus 52, and an output apparatus 53. One or more processors 50 may be included in the electronic device. One processor 50 is shown as an example in FIG. 6. The processor 50, the memory 51, the input apparatus 52, and the output apparatus 53 in the electronic device may be connected via a bus or in other manners. The connection via a bus is shown as an example in FIG. 6.

As a computer-readable storage medium, the memory 51 can be configured to store software programs, computer executable programs, and modules, for example, modules (the processing module 301 or the transmission module 401) corresponding to the signal processing apparatus of embodiments of the present application. The processor 50 executes software programs, instructions, and modules stored in the memory 51 to perform function applications and data processing of the electronic device, that is, to perform the signal processing method.

The memory 51 may include a program storage area and a data storage area, where the program storage area may store an operating system and an application program required by at least one function while the data storage area may store data created according to use of the electronic device. In addition, the memory 51 may include a high-speed random-access memory and may also include a nonvolatile memory such as at least one disk memory, a flash memory, or another nonvolatile solid-state memory. In some examples, the memory 51 may further include memories remotely disposed relative to the processor 50. These remote memories may be connected to the electronic device via a network. Examples of the network include, but are not limited to, the Internet, an intranet, a local area network, a mobile communication network, and a combination thereof.

The input apparatus 52 may be configured to receive inputted digital or character information and generate key signal input related to user settings and function control of the electronic device. The output apparatus 53 may include a display device such as a display screen.

Embodiments of the present application also provide a storage medium including computer-executable instructions. When executed by a computer processor, the computer-executable instructions cause the computer processor to perform a signal processing method. The method includes performing processing according to a target signal and configuration. The processing includes at least one of the following: measurement of the target signal or monitoring of the target signal.

Alternatively, when executed by a computer processor, the computer-executable instructions cause the computer processor to perform a signal processing method. The method also includes transmitting a target signal and configuration.

From the preceding description of embodiments, it is apparent to those skilled in the art that the present application may be implemented by software and necessary general-purpose hardware or may be implemented by hardware, but the former is a preferred implementation in many cases. Based on this understanding, the technical solutions of the present application substantially, or the part contributing to the existing art, may be embodied in the form of a software product. The computer software product may be stored in a computer-readable storage medium such as a floppy disk, a read-only memory (ROM), a random-access memory (RAM), a flash memory, a hard disk, or an optical disc of a computer and includes several instructions for causing a computer device (which may be a personal computer, a server, a network device, or the like) to perform the methods in the embodiments of the present application.

It is to be noted that units and modules included in the preceding embodiment of the apparatus are divided according to functional logic, and the division is not limited to this as long as the corresponding functions can be implemented. Additionally, the specific names of function units are used for distinguishing between each other and are not to limit the scope of the present application.

It is to be understood by those of ordinary skill in the art that some or all steps of the preceding method and function modules/units in the preceding apparatus or device may be implemented as software, firmware, hardware, and suitable combinations thereof.

In the hardware implementation, the division of the preceding function modules/units may not correspond to the division of physical components. For example, one physical component may have multiple functions, or one function or step may be performed jointly by multiple physical components. Some or all physical components may be implemented as software executed by a processor such as a central processing unit, a digital signal processor, or a microprocessor, may be implemented as hardware, or may be implemented as integrated circuits such as application-specific integrated circuits. The corresponding software may be distributed on computer-readable media. The computer-readable media may include computer storage media (or non-transitory media) and communication media (or transitory media). As is known to those having ordinary skill in the art, the term computer storage media includes volatile and nonvolatile media as well as removable and non-removable media implemented in any method or technology for storing information (such as computer-readable instructions, data structures, program modules, or other data). The computer storage media include, but are not limited to, RAMs, ROMs, electrically erasable programmable read-only memories (EEPROMs), flash memories, or other memory technologies; compact disc read-only memories (CD-ROMs), digital versatile discs (DVDs), or other optical disc memories; magnetic cassettes, magnetic tapes, magnetic disk memories, or other magnetic storage devices; or any other media used for storing the desired information and accessible by a computer. Additionally, as is known to those having ordinary skill in the art, the communication media generally include computer-readable instructions, data structures, program modules, or other data in carriers or in modulated data signals transported in other transport mechanisms and may include any information delivery medium.

The preceding content illustrates the preferred embodiments of the present application with reference to the drawings and is not intended to limit the scope of the present application. Any modifications, equivalent substitutions, and improvements made by those skilled in the art without departing from the scope and substantive content of the present application fall within the scope of the present application.

## Claims

1. A signal processing method, applied to a first communication node, comprising:
performing processing according to a target signal and configuration;
wherein the processing comprises at least one of the following: measurement of the target signal or monitoring of the target signal.

2. The method of claim 1, wherein the target signal comprises at least one of the following: a first signal or a second signal, the first signal comprises at least one of the following: a low-power wake-up signal or a low-power synchronization signal, and the second signal comprises at least one of the following: a secondary synchronization signal, a primary synchronization signal, a demodulation reference signal, a channel state information reference signal, or a synchronization signal block.

3. The method of claim 1, wherein the configuration comprises at least one of the following:
target signal processing configuration or measurement-related configuration, wherein the measurement-related configuration comprises at least one of the following: a threshold, an offset, or a reference value.

4. The method of claim 3, wherein the configuration comprises the measurement-related configuration, and the method further comprises:
determining the measurement-related configuration according to a capability of the first communication node.

5. The method of claim 1, wherein the target signal comprises a first signal and a second signal, wherein
the first signal comprises an idle state function signal, and the second signal comprises at least one of the following: a connected state function signal, an inactive state function signal, or a terminal-specific configuration function signal, wherein the terminal-specific configuration function signal comprises a specific idle state function signal, a specific connected state function signal, and a specific inactive state function signal; or
the first signal comprises a function signal of a specific reception point, and the second signal comprises a function signal of a specific area or a cell; or
the first signal comprises a terminal-specific function signal, and the second signal comprises a group-specific function signal; or
the first signal comprises a cell function signal, the second signal comprises an area function signal, and an area comprises at least one cell;
wherein the function signal comprises at least one of the following: a measurement signal, a synchronization signal, or a positioning signal.

6. The method of claim 3, wherein the measurement-related configuration comprises at least one of the following:
the measurement-related configuration is configured to determine signal strength, signal received power, signal quality, or signal received quality;
the measurement-related configuration is configured to compare signal strength, signal received power, signal quality, or signal received quality; or
the measurement-related configuration is configured to determine a difference or compare a difference.

7. The method of claim 3 or 4, wherein the measurement-related configuration comprises at least one of the following:
the measurement-related configuration is configured to determine at least one of the following: cell selection/reselection, being not at a cell edge, low mobility, or being stationary; or
the measurement-related configuration is configured to determine at least one of the following: serving cell measurement, neighboring cell measurement, intra-frequency cell measurement, inter-frequency cell measurement, measurements of inter-RAT E-UTRAN cells, measurement fallback, or measurement relaxation.

8. The method of claim 4, wherein determining the measurement-related configuration according to the capability of the first communication node comprises at least one of the following:
first communication nodes with different capabilities are different in configured threshold or configured threshold parameter;
first communication nodes with different capabilities are the same in configured threshold parameter and different in configured threshold;
first communication nodes with different capabilities are different in configured offset or configured offset parameter;
first communication nodes with different capabilities are the same in configured offset parameter and different in configured offset;
first communication nodes with different capabilities are different in configured reference value or configured reference value parameter;
first communication nodes with different capabilities are the same in configured reference value parameter and different in configured reference value; or
first communication nodes with different capabilities are different in configured target signal processing configuration.

9. The method of claim 4, wherein determining the measurement-related configuration according to the capability of the first communication node comprises at least one of the following:
determining, by a first communication node with a first capability, at least one of a first offset, a first threshold, or a first reference value;
determining, by a first communication node with a second capability, at least one of a second offset, a second threshold, or a second reference value;
determining, by a first communication node with a first capability relative to a first communication node with a second capability, at least one of an offset, a threshold, or a reference value; or
determining, by a first communication node with a first capability and a first communication node with a second capability, at least one of a same offset, a same threshold, or a same reference value.

10. The method of claim 3, wherein the target signal processing configuration comprises at least one of the following:
a processing period, a processing time window, a processing position offset, or a number of processing times.

11. The method of claim 10, wherein the target signal processing configuration satisfies at least one of the following:
a processing period, a processing time window, and a number of processing times of a first signal of the target signal and a processing period, a processing time window, and a number of processing times of a second signal of the target signal are the same, or have a multiple relationship, or have a subset relationship;
a processing position offset of a first signal of the target signal is the same as a processing position offset of a second signal of the target signal;
the target signal processing configuration of a first signal of the target signal is associated with the target signal processing configuration of a second signal of the target signal;
at least one of a first signal processing period, a processing time window, a processing position offset, or a number of processing times of a first signal of the target signal is associated with at least one of a first signal processing period, a processing time window, a processing position offset, or a number of processing times of a second signal of the target signal;
at least one of a processing period, a processing time window, a processing position offset, or a number of processing times of a low-power wake-up signal of a first signal of the target signal is associated with at least one of a processing period, a processing time window, a processing position offset, or a number of processing times of a low-power synchronization signal of the first signal of the target signal;
the target signal processing configuration of a low-power wake-up signal of a first signal of the target signal is associated with the target signal processing configuration of a low-power synchronization signal of the first signal of the target signal;
a processing period of a low-power wake-up signal of the target signal is X times a processing period of a low-power synchronization signal of the target signal;
a processing period of a low-power wake-up signal of the target signal is X times a processing period of a second signal of the target signal, wherein X comprises at least one of 1/4, 1/8, 1/16, 1/2, 1, 2, 4, 8, 16;
a processing period of a low-power wake-up signal of the target signal is greater than or equal to a processing period of a low-power synchronization signal of the target signal;
a processing period of a low-power wake-up signal of the target signal is greater than or equal to a processing period of a second signal of the target signal;
a processing period or a processing time window of a low-power wake-up signal of the target signal is different from a processing period or a processing time window of a low-power synchronization signal of the target signal;
a processing period or a processing time window of a low-power wake-up signal of the target signal is different from a processing period or a processing time window of a second signal of the target signal;
a processing period or a processing time window of a low-power wake-up signal of the target signal is the same as a processing period or a processing time window of a low-power synchronization signal of the target signal;
a processing period or a processing time window of a low-power wake-up signal of the target signal is the same as a processing period or a processing time window of a second signal in the target signal;
a processing position offset of a low-power wake-up signal of the target signal is different from a processing position offset of a low-power synchronization signal of the target signal;
a processing position offset of a low-power wake-up signal in the target signal is different from a processing position offset of a second signal of the target signal;
a processing position offset of a low-power wake-up signal of the target signal is the same as a processing position offset of a low-power synchronization signal of the target signal; or
a processing position offset of a low-power wake-up signal of the target signal is the same as a processing position offset of a second signal of the target signal.

12. The method of claim 1, further comprising:
determining the target signal according to a capability of the first communication node or processing different target signals by first communication nodes with different capabilities.

13. The method of claim 1, wherein performing the processing according to the target signal and the configuration comprises:
processing, by the first communication node, a first signal and a second signal of the target signal;
processing, by the first communication node, a first signal or a second signal of the target signal;
triggering, by the first communication node, processing of a second signal of the target signal according to processing of a first signal of the target signal.

14. The method of claim 13, wherein triggering, by the first communication node, processing of the second signal of the target signal according to processing of the first signal of the target signal satisfies at least one of the following conditions:
signal strength or signal quality of the first signal does not satisfy a threshold;
signal strength or signal quality of the first signal does not satisfy a threshold within a specific time;
signal strength or signal quality of the first signal does not satisfy a threshold within a first preset processing quantity;
reference signal received power or reference signal received quality of the first signal does not satisfy a threshold;
reference signal received power or reference signal received quality of the first signal does not satisfy a threshold within a specific time;
reference signal received power or reference signal received quality of the first signal does not satisfy a threshold within a second preset processing quantity;
signal strength, signal received power, signal quality, or signal received quality of the first signal does not satisfy measurement-related configuration; or
signal strength, signal received power, signal quality, or signal received quality of the first signal does not satisfy at least one of the following: cell selection, cell reselection, being not at a cell edge, low mobility, or being stationary.

15. The method of claim 13, wherein triggering, by the first communication node, processing of the second signal of the target signal according to processing of the first signal of the target signal satisfies at least one of the following:
a processing period of the second signal is greater than a processing period of the first signal;
a number of processing times of the second signal is less than a number of processing times of the first signal;
a processing offset of the second signal is less than a processing period of the first signal;
a processing duration of the second signal is less than a processing duration of the first signal; or
at least one of a processing period, a number of processing times, a processing position offset, or a processing duration of the second signal is associated with at least one of a processing period, a number of processing times, a processing position offset, or a processing duration of the first signal.

16. The method of claim 12, wherein processing different target signals by the first communication nodes with different capabilities comprises:
performing signal processing, by a first communication node with a first capability, according to a first signal of the target signal and performing signal processing, by a first communication node with a second capability, according to a second signal of the target signal;
performing signal processing, by the first communication node with a first capability, according to a first signal of the target signal;
performing signal processing, by the first communication node with a second capability, according to a first signal and/or a second signal of the target signal.

17. The method of claim 2, wherein the target signal comprises at least one of the first signal or the second signal, and a first period of processing of the target signal is determined according to a second period.

18. The method of claim 17, wherein the first period of the processing of the target signal is determined according to the second period in at least one of the following manners:
the second period is a period of serving cell measurement and/or neighboring cell measurement of the second signal, and the first period is a measurement period of the first signal of the target signal or a measurement period of the second signal of the target signal, wherein the first period is less than or equal to the second period, or the first period is an integer divisor of the second period; or
the second period and the first period are each a period of serving cell measurement and/or neighboring cell measurement, wherein the first period is greater than or equal to the second period, or the second period is an integer divisor of the first period.

19. The method of claim 18, wherein the second period and the first period are each the period of the serving cell measurement and/or the neighboring cell measurement in the following manner:
the first period is the period of the serving cell measurement, and the second period is the period of the serving cell measurement, wherein the first period is X times the second period, and X is greater than 0;
the first period is the period of the neighboring cell measurement, and the second period is the period of the neighboring cell measurement, wherein the first period is Y times the second period, Y is greater than 0, and a value of X and a value of Y are predefined or determined by configuration of a second communication node.

20. The method of claim 2, wherein the target signal comprises at least one of the first signal or the second signal in at least one of the following manners:
a measurement period of the first signal of the target signal is less than or equal to a measurement period of the second signal of the target signal;
a measurement period of the first signal of the target signal is M times a measurement period of the second signal of the target signal, wherein M comprises at least one of 1/2, 1/4, 1/8, 1/16, 1/32, 1, 2, 4, 8, 16, 32, or 64; or
a measurement period of the first signal of the target signal is determined by a first parameter, and a measurement period of the second signal of the target signal is determined by a second parameter.

21. A signal processing method, applied to a second communication node, comprising:
transmitting a target signal and configuration.

22. The method of claim 21, wherein the target signal comprises at least one of the following: a first signal or a second signal, the first signal comprises at least one of the following: a low-power wake-up signal or a low-power synchronization signal, and the second signal comprises at least one of the following: a secondary synchronization signal, a primary synchronization signal, a demodulation reference signal, a channel state information reference signal, or a synchronization signal block.

23. The method of claim 21, wherein the configuration comprises at least one of the following:
the target signal processing configuration or measurement-related configuration, wherein the measurement-related configuration comprises at least one of the following: a threshold, an offset, or a reference value.

24. The method of claim 23, wherein the measurement-related configuration comprises at least one of the following:
first communication nodes with different capabilities are different in configured threshold or configured threshold parameter;
first communication nodes with different capabilities are the same in configured threshold parameter and different in configured threshold;
first communication nodes with different capabilities are different in configured offset or configured offset parameter;
first communication nodes with different capabilities are the same in configured offset parameter and different in configured offset;
first communication nodes with different capabilities are different in configured reference value or configured reference value parameter;
first communication nodes with different capabilities are the same in configured reference value parameter and different in configured reference value; or
first communication nodes with different capabilities are different in configured the target signal processing configuration.

25. The method of claim 21, wherein the target signal comprises a first signal and a second signal, wherein
the first signal comprises an idle state function signal, and the second signal comprises at least one of the following: a connected state function signal, an inactive state function signal, or a terminal-specific configuration function signal, wherein the terminal-specific configuration function signal comprises a specific idle state function signal, a specific connected state function signal, and a specific inactive state function signal; or
the first signal comprises a function signal of a specific reception point, and the second signal comprises a function signal of a specific area or a cell; or
the first signal comprises a terminal-specific function signal, and the second signal comprises a group-specific function signal; or
the first signal comprises a cell function signal, the second signal comprises an area function signal, and an area comprises at least one cell;
wherein the function signal comprises at least one of the following: a measurement signal, a synchronization signal, or a positioning signal.

26. The method of claim 23, wherein the measurement-related configuration comprises at least one of the following:
the measurement-related configuration is configured to determine signal strength, signal received power, signal quality, or signal received quality;
the measurement-related configuration is configured to compare signal strength, signal received power, signal quality, or signal received quality; or
the measurement-related configuration is configured to determine a difference or compare a difference.

27. The method of claim 23 or 26, wherein the measurement-related configuration comprises at least one of the following:
the measurement-related configuration is configured to determine at least one of the following: cell selection/reselection, being not at a cell edge, low mobility, or being stationary; or
the measurement-related configuration is configured to determine at least one of the following: serving cell measurement, neighboring cell measurement, intra-frequency cell measurement, inter-frequency cell measurement, measurements of inter-RAT E-UTRAN cells, measurement fallback, or measurement relaxation.

28. The method of claim 23, wherein the target signal processing configuration comprises at least one of the following:
a processing period, a processing time window, a processing position offset, or a number of processing times.

29. The method of claim 28, wherein the target signal processing configuration satisfies at least one of the following:
a processing period, a processing time window, a processing position offset, and a number of processing times of a first signal of the target signal and a processing period, a processing time window, a processing position offset, and a number of processing times of a second signal of the target signal are the same, or have a multiple relationship, or have a subset relationship;
a processing position offset of a first signal of the target signal is the same as a processing position offset of a second signal of the target signal;
the target signal processing configuration of a first signal of the target signal is associated with the target signal processing configuration of a second signal of the target signal;
at least one of a first signal processing period, a processing time window, a processing position offset, or a number of processing times of a first signal of the target signal is associated with at least one of a first signal processing period, a processing time window, a processing position offset, or a number of processing times of a second signal of the target signal;
at least one of a processing period, a processing time window, a processing position offset, or a number of processing times of a low-power wake-up signal of a first signal of the target signal is associated with at least one of a processing period, a processing time window, a processing position offset, or a number of processing times of a low-power synchronization signal of the first signal of the target signal;
the target signal processing configuration of a low-power wake-up signal of a first signal of the target signal is associated with the target signal processing configuration of a low-power synchronization signal of the first signal of the target signal;
at least one of a processing period, a processing time window, a processing position offset, or a number of processing times of a low-power wake-up signal of a first signal of the target signal is associated with at least one of a processing period, a processing time window, a processing position offset, or a number of processing times of a low-power synchronization signal of the first signal of the target signal;
a processing period of a low-power wake-up signal of the target signal is X times a processing period of a low-power synchronization signal of the target signal;
a processing period of a low-power wake-up signal of the target signal is X times a processing period of a second signal of the target signal, wherein X comprises at least one of 1/4, 1/8, 1/16, 1/2, 1, 2, 4, 8, 16;
a processing period of a low-power wake-up signal of the target signal is greater than or equal to a processing period of a low-power synchronization signal of the target signal;
a processing period of a low-power wake-up signal of the target signal is greater than or equal to a processing period of a second signal of the target signal;
a processing period or a processing time window of a low-power wake-up signal of the target signal is different from a processing period or a processing time window of a low-power synchronization signal of the target signal;
a processing period or a processing time window of a low-power wake-up signal of the target signal is different from a processing period or a processing time window of a second signal of the target signal;
a processing period or a processing time window of a low-power wake-up signal of the target signal is the same as a processing period or a processing time window of a low-power synchronization signal of the target signal;
a processing period or a processing time window of a low-power wake-up signal of the target signal is the same as a processing period or a processing time window of a second signal in the target signal;
a processing position offset of a low-power wake-up signal of the target signal is different from a processing position offset of a low-power synchronization signal of the target signal;
a processing position offset of a low-power wake-up signal of the target signal is different from a processing position offset of a second signal of the target signal;
a processing position offset of a low-power wake-up signal of the target signal is the same as a processing position offset of a low-power synchronization signal of the target signal; or
a processing position offset of a low-power wake-up signal of the target signal is the same as a processing position offset of a second signal of the target signal.

30. The method of claim 21, further comprising:
processing different target signals by first communication nodes with different capabilities.

31. The method of claim 30, wherein processing different target signals by the first communication nodes with different capabilities comprises at least one of the following:
performing signal processing, by a first communication node with a first capability, according to a first signal of the target signal and performing signal processing, by a first communication node with a second capability, according to a second signal of the target signal;
performing signal processing, by a first communication node with a first capability, according to a first signal of the target signal;
performing signal processing, by a first communication node with a second capability, according to a first signal and/or a second signal of the target signal.

32. The method of claim 21, wherein a first period of processing of the target signal is determined according to a second period.

33. The method of claim 32, wherein the first period of the processing of the target signal is determined according to the second period in at least one of the following manners:
the second period is a period of serving cell measurement and/or neighboring cell measurement of the second signal, and the first period is a measurement period of the first signal of the target signal or a measurement period of the second signal of the target signal, wherein the first period is less than or equal to the second period, or the first period is an integer divisor of the second period; or
the second period and the first period are each a period of serving cell measurement and/or neighboring cell measurement, wherein the first period is greater than or equal to the second period, or the second period is an integer divisor of the first period.

34. The method of claim 33, wherein the second period and the first period are each the period of the serving cell measurement and/or the neighboring cell measurement in the following manner:
the first period is the period of the serving cell measurement, and the second period is the period of the serving cell measurement, wherein the first period is X times the second period, and X is greater than 0;
the first period is the period of the neighboring cell measurement, and the second period is the period of the neighboring cell measurement, wherein the first period is Y times the second period, Y is greater than 0, and a value of X and a value of Y are predefined or determined by configuration of a second communication node.

35. The method of claim 22, wherein the target signal comprises at least one of the first signal or the second signal in at least one of the following manners:
a measurement period of the first signal of the target signal is less than or equal to a measurement period of the second signal of the target signal;
a measurement period of the first signal of the target signal is M times a measurement period of the second signal of the target signal, wherein M comprises at least one of 1/2, 1/4, 1/8, 1/16, 1/32, 1, 2, 4, 8, 16, 32, or 64; or
a measurement period of the first signal of the target signal is determined by a first parameter, and a measurement period of the second signal of the target signal is determined by a second parameter.

36. An electronic device, comprising:
one or more processors; and
a memory configured to store one or more programs;
wherein when executed by the one or more processors, the one or more programs cause the one or more processors to perform the signal processing method of any one of claims 1 to 20 or the signal processing method of any one of claims 21 to 35.

37. A computer-readable storage medium storing one or more programs which, when executed by one or more processors, cause the one or more processors to perform the signal processing method of any one of claims 1 to 20 or the signal processing method of any one of claims 21 to 35.
